# FASCICULE DE BREVET EUROPEEN

(11) **EP 4 407 154 B1**
(45) Date de publication et mention de la délivrance du brevet: **11.03.2026**
(21) Numéro de dépôt: 24153759.6
(22) Date de dépôt: 24.01.2024
(51) Int. Cl.: F01P 3/18, B60K 11/04

(54) **SYSTEME DE FIXATION D'UN MODULE DE REFROIDISSEMENT D'UN VEHICULE**
BEFESTIGUNGSSYSTEM FÜR EIN KÜHLMODUL EINES FAHRZEUGS
SYSTEM FOR ATTACHING A COOLING MODULE OF A VEHICLE

(30) Priorité: 30.01.2023 FR 2300828
(43) Date de publication de la demande: 31.07.2024
(73) Titulaire: Renault s.a.s, 92100 Boulogne Billancourt (FR)
(72) Inventeur: DE MAGNEVAL, Gilles, 78280 GUYANCOURT (FR); LECROQ, Dominique, 78640 VILLIERS SAINT FREDEDIC (FR); MONNOT, Bernard, 78280 GUYANCOURT (FR); SOLTOIAN, Serghei, 78280 GUYANCOURT (FR)

(56) Documents cités:
- EP-A1- 1 067 005
- EP-A1- 1 354 745
- EP-A1- 4 105 051
- EP-A2- 2 161 529
- US-A1- 2001 001 994

## Description

L'invention concerne un système de fixation d'un module de refroidissement d'un véhicule, notamment de refroidissement d'un moteur de véhicule. L'invention concerne également un agencement comprenant un tel système de fixation. L'invention concerne encore véhicule équipé d'un système de fixation et/ou d'un agencement selon l'invention. L'invention concerne enfin un procédé de montage du système de fixation selon l'invention.

Dans le milieu automobile, des modules de refroidissement, aussi qualifiés de modules de traitement thermique, radiateur ou valises de refroidissement, sont classiquement équipés en face avant du véhicule. Particulièrement, le module de refroidissement peut être monté sur un support tel qu'une face avant technique du véhicule, correspondant à une structure du véhicule située en avant du groupe motopropulseur et ayant pour fonction de supporter différents organes du véhicule.

Il est connu de réaliser la fixation du module de refroidissement par l'intermédiaire d'un système de fixation comprenant des pions disposés sur une partie supérieure du module s'étendant verticalement. Un tel système de fixation peut néanmoins être incompatible avec des architectures et fonctions spécifiques du véhicule, tel que cela peut être le cas en présence d'un système de verrouillage du capot réalisé au niveau d'une ou plusieurs zone(s) latérale(s) du capot en lieu d'une zone centrale, par exemple au moyen d'un système à double serrure.

Il est également connu de mettre en œuvre un système de fixation comprenant des pions s'étendant verticalement. Chaque pion peut alors porter une patte fixée sur le support par l'intermédiaire d'une pluralité de vis. De telles pattes et pions génèrent un encombrement transversal important résultant en une réduction de la taille du module de refroidissement et, par voie de conséquence, en une réduction des performances de traitement thermique dudit module. Egalement, un tel système de fixation peut être inadapté aux contraintes de fusibilité imposées aux véhicules. En effet, en cas de choc, tel que cela peut être observé dans le cadre de protocoles d'essais de chocs de type standardisés RCAR, pour le nom anglais Research Council for Automobile Repairs, ou lors de la vie du véhicule, le module de refroidissement tend à être déplacé vers l'arrière du véhicule. Un tel déplacement s'accompagne de la rupture, et notamment la destruction, d'au moins une partie du système de fixation. Les systèmes de fixation connus sont configurés afin de soumettre les pions aux contraintes de fusibilité de sorte que ceux-ci soient rompus en cas de choc. Un tel principe peut néanmoins s'accompagner de dommages conséquents et onéreux au niveau du module de refroidissement, par exemple au niveau d'une boîte à eau portant l'un des pions, ce qui est susceptible de générer des fuites.

Le document EP1354745A1 divulgue un système de fixation d'un module de refroidissement d'un véhicule comportant un plot de liaison, un organe de filtration et une patte de fixation amovible.

La présente invention s'inscrit dans ce contexte et vise à fournir une alternative aux systèmes de fixation connus qui soit peu coûteuse, peu encombrante de sorte à optimiser la surface d'échange thermique du module de refroidissement et adaptée afin de faciliter et limiter les coûts de toute intervention de réparation susceptible d'être requise à la suite d'un choc en face avant.

L'invention concerne ainsi un système de fixation d'un module de refroidissement selon la revendication 1.

Le support comprend particulièrement une première cavité et une deuxième cavité, respectivement configurées pour coopérer avec l'organe de filtration et l'organe de reprise d'effort, et au moins un élément de fixation configuré pour coopérer avec l'organe de fixation.

Notamment, la patte de fixation peut comprendre un corps portant l'organe de reprise d'effort et l'organe de fixation, le corps, l'organe de reprise d'effort et l'organe de fixation étant venus de matière.

L'organe de reprise d'effort peut :
- comprend une forme cylindrique ou tronconique ; et/ou
- comprend au moins une rainure.

Notamment, l'organe de fixation peut être du type clip.

En outre, le système de fixation peut optionnellement comprendre au moins un moyen de fixation, tel qu'une vis, la patte de fixation et le support comprenant respectivement un orifice et un trou apte à recevoir ledit moyen de fixation. Notamment, le plot de liaison peut comprendre un bord plat et l'organe de filtration peut comprendre un côté plat, configuré pour s'étendre au contact du bord plat.

Selon des exemples de réalisation :
- l'organe de filtration peut être amovible et rapporté relativement à la patte de fixation et au plot de liaison ; ou
- l'organe de filtration est solidaire de la patte de fixation.

L'invention concerne également un agencement comprenant au moins un système de fixation selon l'invention et un module de refroidissement :
- le module de refroidissement comprenant un cadre auquel est relié le plot de liaison ; ou
- le module de refroidissement comprenant une boîte à eau, configurée pour permettre la circulation d'un fluide tel que de l'eau glycolée, à laquelle est relié le plot de liaison.

L'invention porte encore sur un véhicule comprenant au moins un système de fixation et/ou un agencement selon l'invention.

L'invention concerne enfin un procédé de montage d'un système de fixation selon la revendication 10.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique vue de face d'un exemple de réalisation d'un véhicule comprenant un système de fixation d'un module de refroidissement.
La figure 2 est une représentation schématique du module de refroidissement équipé d'une pluralité de systèmes de fixation.
La figure 3 est une représentation schématique éclatée et assemblée du système de fixation.
La figure 4 est une représentation schématique de la coopération entre un plot de liaison, un organe de filtration et une patte de fixation du système de fixation.
La figure 5 est une représentation schématique de la coopération entre le plot de liaison, l'organe de filtration, la patte de fixation et un support du système de fixation.
La figure 6 est une représentation schématique en coupe du système de fixation.

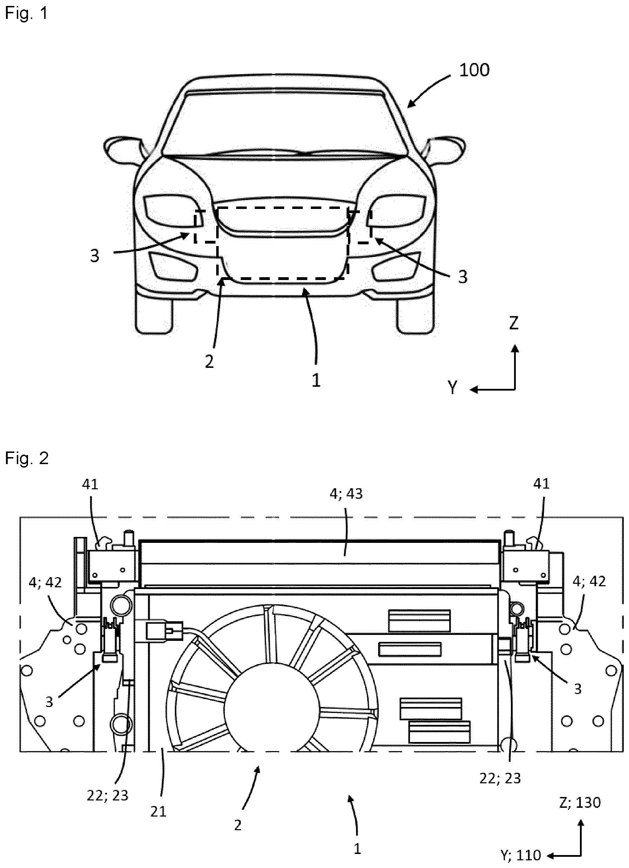

La figure 1 illustre schématiquement un exemple de réalisation d'un véhicule 100, notamment un véhicule automobile. Le véhicule 100 considéré peut être de tout type. Par exemple, le véhicule 100 peut être un véhicule particulier ou un véhicule utilitaire. Egalement, le véhicule 100 peut être à motorisation thermique, électrique ou hybride.

Selon les conventions relatives au domaine automobile, dans l'ensemble de la description ci-après, la direction dans laquelle le véhicule 100 automobile se déplace en ligne droite est définie comme étant la direction longitudinale X. La direction perpendiculaire à la direction longitudinale et située dans un plan parallèle à un sol sur lequel repose le véhicule 100 est nommée direction transversale Y. La direction perpendiculaire aux directions X et Y est nommée direction verticale Z. Ainsi, on définit un repère direct XYZ. Les termes « haut » et « bas » ou « supérieur » et « inférieur » s'entendent dans leur sens général, les termes « bas » et « inférieur » désignant une proximité avec le sol plus importante. Il en va de même pour les termes « avant » et « arrière ». Egalement, les termes « premier », « deuxième » ont vocation à distinguer des éléments similaires et non à définir une hiérarchie au sein desdits éléments.

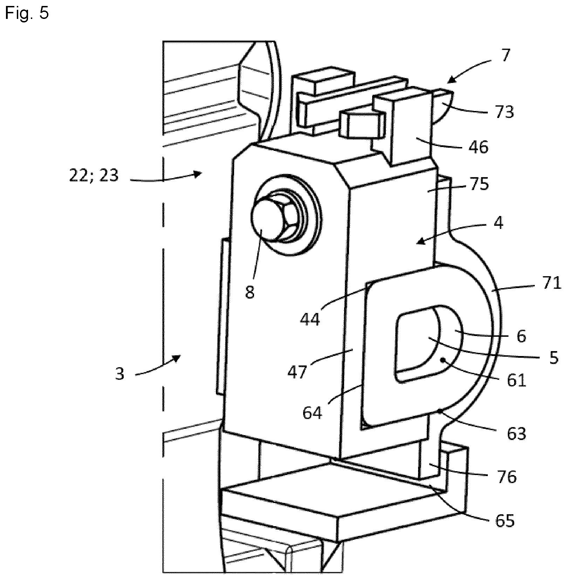

Le véhicule 100 comprend un agencement 1 comprenant un module de refroidissement 2 et au moins un système de fixation 3 dudit module. Les figures 2 à 6 illustrent différents exemples et modes de réalisation du système de fixation 3 selon l'invention. Tel que d'avantage exposé ci-après, l'agencement 1 peut comprendre une pluralité de systèmes de fixation 3, notamment deux, tels que définis ci-après selon l'invention.

Le module de refroidissement 2 peut aussi être qualifié de module de traitement thermique, radiateur ou valise de refroidissement. Il est équipé en face avant du véhicule 100 et est destiné au traitement thermique, particulièrement au refroidissement, d'au moins un moteur d'un groupe motopropulseur équipant le véhicule 100 et/ou d'au moins un composant électronique équipant le véhicule 100.

Le module de refroidissement 2 délimite au moins en partie un circuit configuré pour permettre la circulation d'un fluide, tel qu'un fluide de refroidissement du type eau glycolée. Le module de refroidissement 2 est notamment apte à mettre en œuvre un échange thermique eau-air entre ledit fluide et un flux d'air extérieur au véhicule 100 entrant en face avant du véhicule 100.

De manière classique, le module de refroidissement 2 comprend un élément central 21 comportant une pluralité de faisceaux, non détaillés. Le module de refroidissement 2 peut comprendre un cadre 22 et/ou au moins une boîte à eau 23 relié(s) à l'élément central 21. On entend par boîte à eau 23 un élément apte à permettre la circulation et/ou le stockage du fluide. Par exemple, l'élément central 21 peut être transversalement encadré par des boîtes à eau 23 de sorte qu'une boîte à eau 23 est disposée de chaque côté de l'élément central 21.

La description ci-après est faite en référence à un système de fixation 3 d'un module de refroidissement 2 sur un support 4 de véhicule 100, il est néanmoins entendu que celle-ci s'étend mutatis mutandis à une pluralité de systèmes de fixation 3. Il est également entendu que les systèmes de fixation 2 compris au sein d'un même agencement 1 peuvent être identiques ou, alternativement, être réalisés selon différentes alternatives ou variantes de l'invention.

De manière générale le système de fixation 3 comprend le support 4, un plot de liaison 5, un organe de filtration 6 et une patte de fixation 7 qui est configurée pour maintenir l'organe de filtration 6 et le plot de liaison 5 relativement au support 4.

Le support 4 peut notamment être un élément d'une face avant technique du véhicule 100. On entend par « face avant technique » une structure située en avant du groupe motopropulseur, ou bloc moteur, et qui est configurée pour supporter différents organes, notamment le module de refroidissement 2, et/ou intégrer différentes fonctions du véhicule 100, par exemple supporter au moins une butée de capot ou une serrure 41 de capot.

La face avant technique peut prendre de multiples formes. Elle comprend notamment une pluralité de pièces réalisées dans un matériau plastique et/ou dans une pluralité de pièces réalisées dans un matériau métallique. Selon un exemple de réalisation non limitatif, la face avant technique peut former un cadre ouvert, notamment en « U inversé ». La face avant technique comprend alors deux bras latéraux 42 s'étendant verticalement ou sensiblement verticalement et un bras intermédiaire supérieur 43, reliant les bras latéraux 42 entre eux. Une telle face avant technique peut alors être combinée à une traverse inférieure, non représentée, permettant d'assurer le portage au moins partiel du module de refroidissement 2. Selon un autre exemple de réalisation, non limitatif, la face avant technique peut former un encadrement fermé comprenant les bras latéraux 42, le bras intermédiaire supérieur 43 ainsi qu'un bras intermédiaire inférieur, reliant les bras latéraux 42 entre eux et apte à assurer au moins partiellement le portage du module de refroidissement 2.

Le plot de liaison 5 comprend une forme allongée et est configuré pour être relié au module de refroidissement 2. Le plot de liaison 5 est rectiligne ou sensiblement rectiligne. Il s'étend le long d'une première direction 110, laquelle peut être parallèle ou sensiblement parallèle à la direction transversale Y lorsque l'agencement 1 est équipé au sein du véhicule 100. Notamment, le plot de liaison 5 comprend une forme cylindrique. Par exemple, le plot de liaison 5 peut comprendre une forme cylindrique à base circulaire ou, de manière préférentielle, une forme cylindrique comprenant au moins un bord plat 51. Selon un exemple de réalisation préféré la forme cylindrique du plot de liaison 5 présente une base de dimension principale supérieure ou égale à 10 mm. On entend par dimension principale une dimension la plus longue séparant des points opposés d'une périphérie de la base de la forme cylindrique, par exemple un diamètre dans le cas d'une base circulaire.

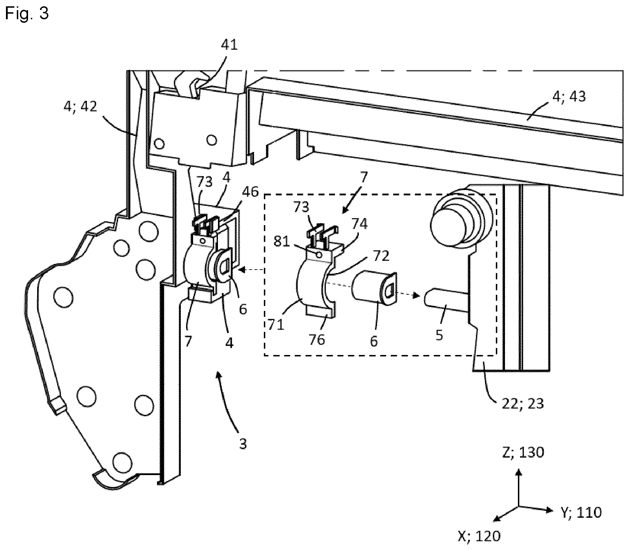

Le plot de liaison 5 peut être réalisé dans un matériau plastique, tel que du polyamide ou du polypropylène, par exemple renforcé avec des fibres de verre, comme du PA66 GF30 ou encore du PP GF35, ou dans un matériau métallique, tel que de l'aluminium, notamment de l'aluminium série 3000, ou autre. Selon des alternatives de réalisation, le plot de liaison 5 peut être relié au cadre 22 ou à la boîte à eau 23 du module de refroidissement 2, tel qu'illustré à la figure 2 ou 3. De manière particulière, le plot de liaison 5 d'une part et le cadre 22 ou la boîte à eau 23 d'autre part, peuvent former un ensemble monobloc. On entend ici par monobloc qu'ils ne peuvent être dissociés l'un de l'autre sans résulter en la dégradation ou destruction du système de fixation 3.

L'organe de filtration 6 a fonction de limitation, voire prévention, de la propagation de bruits solidiens depuis le module de refroidissement 2 vers le support 4. L'organe de filtration 6 assure ainsi le découplage du module de refroidissement 2 relativement au support 4, en l'espèce la face avant technique, de sorte que les bruits émis par rayonnement acoustique du module de refroidissement 2 du fait des vibrations du groupe motopropulseur n'affectent pas, ou peu, le support 4. L'organe de filtration 6 est amovible, notamment amovible relativement au plot de liaison 5, et est configuré pour être monté de manière réversible sur le plot de liaison 5. Par exemple, l'organe de filtration 6 peut être monté sur le plot de liaison 5 selon un mouvement de translation le long de la première direction 110. L'organe de filtration 6 peut être réalisé dans un matériau plastique tel que de l'EPDM, abréviation d'éthylène, propylène, diène et monomère, notamment de l'EPDM 40 SHORE A.

L'organe de filtration 6 comprend une forme creuse configurée pour recevoir le plot de liaison 5. Autrement dit, l'organe de filtration 6 est configuré pour entourer au moins partiellement le plot de liaison 5. L'organe de filtration 6 comprend une surface interne 61 configurée pour être en contact au moins partiel du plot de liaison 5. Notamment, la surface interne 61 s'inscrit dans une forme, notamment cylindrique, au moins en partie complémentaire de forme du plot de liaison 5. Par exemple, lorsque le plot de liaison 5 comprend le bord plat 51, l'organe de filtration 6 peut comprendre un côté interne plat 62, configuré pour s'étendre au contact du bord plat 51 du plot de liaison 5 de sorte à prévenir un déplacement en rotation de l'organe de filtration 6 relativement au plot de liaison 5 et inversement.

L'organe de filtration 6 comprend une surface externe 63 configurée pour être au contact au moins partiel de la patte de fixation 7 du support 4, tel que davantage exposé ci-après. Notamment, la surface externe 63 s'inscrit dans une forme, notamment cylindrique, au moins en partie complémentaire de forme de la patte de fixation 7 et/ou du support 4. Par exemple, la surface externe 63 de l'organe de filtration 6 peut comprendre un côté externe plat 64 configuré pour être disposé en appui du support 4.

Notamment, l'organe de filtration 6 présente une longueur supérieure ou égale à une longueur du plot de liaison 5. La longueur de l'organe de filtration 6 est ici définie comme étant la dimension mesurée le long de la direction transversale Y et/ou le long de la première direction 110 lorsque l'organe de filtration 6 est monté sur le plot de liaison 5. Il en va de même pour la longueur du plot de liaison 5, mesurée entre une zone reliant le plot de liaison 5 au module de refroidissement 2 et une extrémité libre du plot de liaison 5, opposée. De la sorte, l'organe de filtration 6 peut entourer tout ou partie de la longueur du plot de liaison 5.

La patte de fixation 7 est une pièce rapportée amovible relativement au support 4 configurée pour être fixée sur le support 4. La patte de fixation 7 est configurée pour coopérer avec l'organe de filtration 6 et loger partiellement celui-ci lorsque qu'il est monté sur le plot de liaison 5. De la sorte la patte de fixation 7 permet de maintenir l'ensemble formé par le plot de liaison 5 et l'organe de filtration 6 relativement au support 4 le long d'une deuxième direction 120 perpendiculaire à la première direction 110 et parallèle, ou sensiblement parallèle, à la direction longitudinale X lorsque l'agencement 1 est disposé au sein du véhicule 100.

A cette fin, la patte de fixation 7 comprend un corps 71 configuré pour coopérer avec l'organe de filtration 6 lorsque celui-ci est monté sur le plot de liaison 5. Le corps 71 comprend un renfoncement 72 au moins en partie complémentaire de forme de l'organe de filtration 6, notamment de la surface externe 63 de l'organe de filtration 6. En l'espèce le renfoncement 72 présente une forme courbée.

En outre, la patte de fixation 7 comprend au moins un organe de fixation 73 et au moins un organe de reprise d'effort 74 configurés pour coopérer avec le support 4, notamment avec l'un des bras latéraux 42 de la face avant technique dans l'exemple illustré. La description ci-après est faite en référence à une patte de fixation 7 comprenant un organe de fixation 73 et un organe de reprise d'effort 74, il est néanmoins entendu que celle-ci peut comprendre une pluralité d'organes de fixation 73 et/ou d'organes de reprise d'effort 74

Additionnellement, le support 4 comprend une première cavité 44 configurée pour recevoir le plot de liaison 5 et/ou l'organe de filtration 6, une deuxième cavité 45, configurée pour coopérer avec l'organe de reprise d'effort 74 et au moins un élément de fixation 46 configuré pour coopérer avec l'organe de fixation 73. Le support 4 peut ainsi directement coopérer avec l'ensemble formé par le plot de liaison 5 et l'organe de filtration 6, permettant le portage du module de refroidissement 2 sans nécessiter la présence de pièces intermédiaires, tel que cela peut être observé dans l'art antérieur. Un tel principe permet de réaliser le portage du module de refroidissement par un élément, ici le support 4, présentant une meilleure raideur. Les contraintes mécaniques liées aux sollicitations vibratoires, notamment verticales, sont ainsi reprises par le support 4.

De manière préférentielle, la première cavité 44 et la deuxième cavité 45 sont tournées vers l'arrière du véhicule, de sorte que, lorsque l'agencement 1 est mis en œuvre dans le véhicule 100, le support 4 est au moins en partie disposé en amont du plot de liaison 5 et/ou de l'organe de filtration 6 le long de la direction longitudinale X.

La première cavité 44 et/ou la deuxième cavité 45 peu(ven)t être comprise(s) dans un flanc du support 4, en l'espèce de la face avant technique, ou dans un étui compris ou porté par ledit support 4.

La patte de fixation 7 peut être réalisée dans un matériau plastique, notamment dans un matériau plastique chargé tel que du polyamide. De manière préférentielle, avantageuse, le corps 71, l'organe de reprise d'effort 74 et l'organe de fixation 73 de la patte de fixation 7 sont venus de matière et forment un ensemble monobloc.

Également, selon un exemple de réalisation préférentiel, l'organe de filtration 6 est amovible et rapporté relativement à la patte de fixation 7 et au plot de liaison 5. La patte de fixation 7, de par sa position, sa forme et coopération avec le support 4, étant configurée pour rompre en cas de choc au niveau de la face avant du véhicule 100 afin de répondre aux contraintes de fusibilité exposées plus haut, un tel principe permet un remplacement simple et peu coûteux de la patte de fixation 7. Également, la fonction de filtration de l'organe de filtration 6 est alors dissociée de la patte de fixation 7, ce qui permet de faciliter la gestion des prestations acoustiques en fonction de la taille et la masse du module de refroidissement. La patte de fixation 7 peut ainsi être reconduite de véhicules en véhicules et l'organe de filtration 6 peut être adapté, notamment en adaptant ses dimensions si besoin.

Selon une alternative non représentée, l'organe de filtration 6 peut être solidaire de la patte de fixation 7, lesdites pièces pouvant alors être co-moulées ou la patte de fixation 7 pouvant être surmoulée sur l'organe de filtration 6.

La première cavité 44 est configurée pour recevoir tout ou partie du plot de liaison 5 et/ou de l'organe de filtration 6. De préférence, la première cavité 44 est configurée pour recevoir le plot de liaison 5 et l'organe de filtration 6 monté sur celui-ci. Optionnellement, un fond 47 de la première cavité 44 est configuré pour former butée du plot de liaison 5 et/ou l'organe de filtration 6 le long d'au moins un sens de la deuxième direction 120. Ainsi, selon l'invention, lorsque le système de fixation 3 est installé et que la patte de fixation 7 est montée sur le support 4, le plot de liaison 5 et l'organe de filtration 6 sont interposés entre le fond 47 de la première cavité 44 et le corps 71 de la patte de fixation 7 le long de la deuxième direction 120. Notamment, le fond 47 de la première cavité 44 peut comprendre une structure au moins en partie complémentaire de forme de l'organe de filtration 6. En l'espèce, la première cavité 44 comprend, selon un exemple non limitatif de réalisation, un fond 47 plat configuré pour former butée d'un côté de l'organe de filtration 6, ici le côté externe plat 64.

La patte de fixation 7 est maintenue solidaire du support 4 par l'intermédiaire de l'organe de fixation 73 et de l'élément de fixation 46, complémentaires. L'organe de fixation 73 permet le blocage de la patte de fixation 7, et par extension de l'organe de filtration 6 et/ou du plot de liaison 5 qu'elle loge, relativement au support 4 le long de la deuxième direction 120. Selon un exemple de réalisation préféré, l'organe de fixation 73 est disposé au niveau d'une première extrémité 75 de la patte de fixation 7, sélectionnée parmi une extrémité supérieure ou une extrémité inférieure de la patte de fixation 7.

De manière préférentielle, l'organe de fixation 73 est du type clip. Selon une alternative de réalisation non représentée, la patte de fixation 7 peut comprendre une pluralité d'organes de fixation 73 tandis que le support 4 comprend une pluralité d'éléments de fixation 46.

L'autre de l'extrémité supérieure ou de l'extrémité inférieure de la patte de fixation 7 qualifiée ci-après de deuxième extrémité 76, opposée à la première extrémité 75, est également configurée pour coopérer avec le support 4. Notamment, la deuxième extrémité 76, ici mise en œuvre au niveau de l'extrémité inférieure de la patte de fixation 7, comprend un segment rectiligne. Le support 4 comprend alors une ouverture 65 ou une gorge configurée pour recevoir tout ou partie dudit segment. L'ouverture 65 est bordée par au moins un rebord configuré pour former butée de la patte de fixation 7, particulièrement du segment, le long d'au moins un sens de la deuxième direction 120 et ainsi maintenir la patte de fixation 7 dans l'ouverture 65.

L'organe de reprise d'effort 74 est configuré pour coopérer avec la deuxième cavité 45 afin de maintenir la patte de fixation 7 relativement au support 4 le long de la première direction 110 et le long d'une troisième direction 130, orthogonale à la première direction 110 et à la deuxième direction 120, par exemple parallèle à la direction verticale Z. L'organe de reprise d'effort 74 est destiné à former la jonction entre le support 4 et le module de refroidissement 2. Il permet de supporter la masse du module de refroidissement 2 et de fixer celui-ci relativement au support 4 le long de deux directions orthogonales l'une à l'autre. Par exemple, selon des exemples de réalisation distincts, le module de refroidissement 2 peut être relié au support 4 par un ou plusieurs système(s) de fixation, comprenant chacun au moins un organe de reprise d'effort 74.

La deuxième cavité 45 est configurée pour recevoir l'organe de reprise d'effort 74. La deuxième cavité 45 comprend une structure au moins en partie complémentaire de forme de l'organe de reprise d'effort 74. Optionnellement, un fond de la deuxième cavité 45 est configuré pour former butée de l'organe de reprise d'effort 74 le long d'au moins un sens de la deuxième direction 120. Ainsi, lorsque le système de fixation 3 est installé et que la patte de fixation 7 est montée sur le support 4, l'organe de reprise d'effort 74 s'étend dans la deuxième cavité 45, le support 4 maintenant la patte de fixation 7, par l'intermédiaire de l'organe de reprise d'effort 74, au moins le long de la première direction 110 et de la troisième direction 130.

Selon un exemple de réalisation préférentiel, l'organe de reprise d'effort 74 est interposé, le long de la troisième direction 130 et/ou le long de la direction verticale Z, entre l'organe de fixation 73 et le renfoncement 72 configuré pour recevoir l'organe de filtration 6.

Selon un exemple de réalisation non limitatif, l'organe de reprise d'effort 74 peut comprendre, le long de la deuxième direction 120 par exemple, une forme conique à base polygonale ou une forme tronconique à base polygonale. Optionnellement, une extrémité libre de l'organe de reprise d'effort 74 peut comprend un ou plusieurs chanfrein(s). Tel qu'exposé précédemment, la deuxième cavité 45 peut alors comprendre une forme, par exemple un fond ou des parois reliées audit fond, présentant une forme au moins en partie complémentaire.

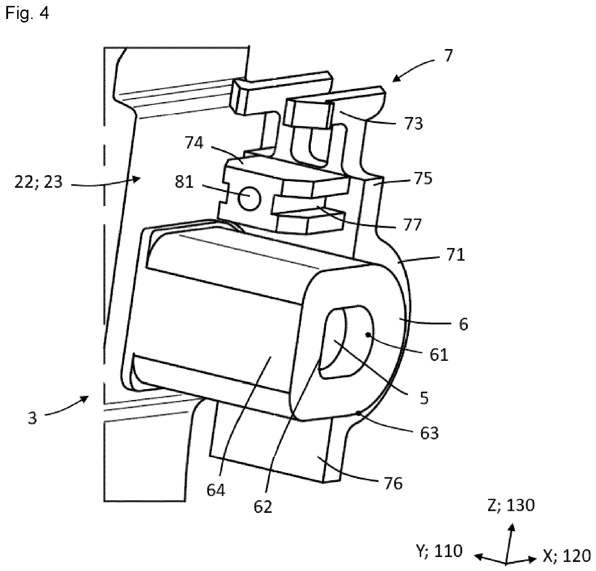

Additionnellement ou alternativement, l'organe de reprise d'effort 74 peut comprendre au moins une rainure 77. L'au moins une rainure 77 s'étend, selon un exemple de réalisation illustré à la figure 4, le long de la deuxième direction 120. Le support 4, plus particulièrement la deuxième cavité 45, peut comprendre au moins une nervure ou un rail configuré pour coopérer avec l'au moins une rainure 77. Par exemple, l'organe de reprise d'effort 74 peut comprendre une pluralité de rainures 77. La présence d'au moins une rainure 77 permet avantageusement d'augmenter la surface de contact entre la patte de fixation 7 et le support 4 tout en limitant l'encombrement de l'organe de reprise d'effort 74. Elle permet également le guidage et l'indexage de la patte de fixation 7 relativement au support 4. Elle permet encore d'optimiser le blocage du déplacement de la patte de fixation 7, et par extension du plot de liaison 5 et de l'organe de filtration 6, le long de la première direction 110 et de la troisième direction 130.

De manière optionnelle, le système de fixation 3 peut, en outre, comprendre au moins un moyen de fixation 8, tel qu'une vis. La patte de fixation 7 comprend alors un orifice 81 apte à recevoir ledit moyen de fixation 8 tandis que le support 4 comprend un trou 82, configuré pour s'étendre en regard de l'orifice 81 de la patte de fixation 7 lorsque celle-ci est montée sur le support 4, et configuré pour recevoir le moyen de fixation 8. Selon un exemple de réalisation préférentiel, l'orifice 81 est compris dans l'organe de reprise d'effort 74 et s'étend au travers de celui-ci et du corps 71 le long de la deuxième direction 120. Un tel principe permet notamment d'assurer une fixation, temporaire ou de remplacement, à moindre coût de la patte de fixation 7 relativement au support 4 en cas de rupture ou d'endommagement de l'organe de fixation 73 et/ou de l'élément de fixation 46, par exemple dans l'attente d'un changement de la patte de fixation 7.

Ainsi, l'agencement 1 peut comprendre un ou plusieurs système(s) de fixation 3 tel qu'exposé précédemment, chacun pouvant être configuré de sorte que le cadre 22 du module de refroidissement 2 comprend le plot de liaison 5 ou que la boîte à eau, ou l'une des boîtes à eau, du module de refroidissement 2, est reliée ou comprend le plot de liaison 5.

Préférentiellement, l'agencement 1 comprend deux systèmes de fixation 3, un système de fixation 3 étant disposé de chaque côté du module de refroidissement 2 le long de de la première direction 110 et/ou de la direction transversale Y. Le module de refroidissement 2 est ainsi encadré par les systèmes de fixation 3 le long de ces mêmes directions. Optionnellement, le système de fixation 3, plus particulièrement le plot de liaison 5, est disposé dans une partie supérieure d'une hauteur du module de refroidissement 2, mesurée le long de la direction verticale Z. Par exemple, le système de fixation 3 est disposé dans un tiers supérieur de la hauteur du module de refroidissement 2.

Optionnellement, le maintien du module de refroidissement 2 relativement à la face avant technique peut additionnellement, de manière connue, être mis en œuvre au moyen d'un ou plusieurs pion(s) disposé(s) au niveau de la partie inférieure du module de refroidissement 2. Les pions assurent alors la coopération entre le bras intermédiaire inférieur de la face avant technique ou la traverse inférieure exposés précédemment.

L'invention concerne également un procédé de montage d'un système de fixation 3 selon l'invention. Ledit procédé peut également être assimilé à un procédé de fonctionnement dudit système ou d'un agencement 1 comprenant un tel système.

Le procédé de montage comprend le positionnement de l'organe de filtration 6 sur le plot de liaison 5. Le positionnement est notamment réalisé selon un mouvement de translation le long de la première direction 110. Lorsque le plot de liaison 5 et l'organe de filtration 6 sont solidaires, tel qu'exposé plus haut, l'organe de filtration 6 et la patte de fixation 7 sont positionnés simultanément sur le plot de liaison 5. Inversement, lorsqu'ils sont séparés et amovibles relativement l'un à l'autre, l'organe de filtration 6 est positionné seul.

Le plot de liaison 5, au moins équipé de l'organe de filtration 6, est ensuite disposé dans la première cavité 44 du support 4.

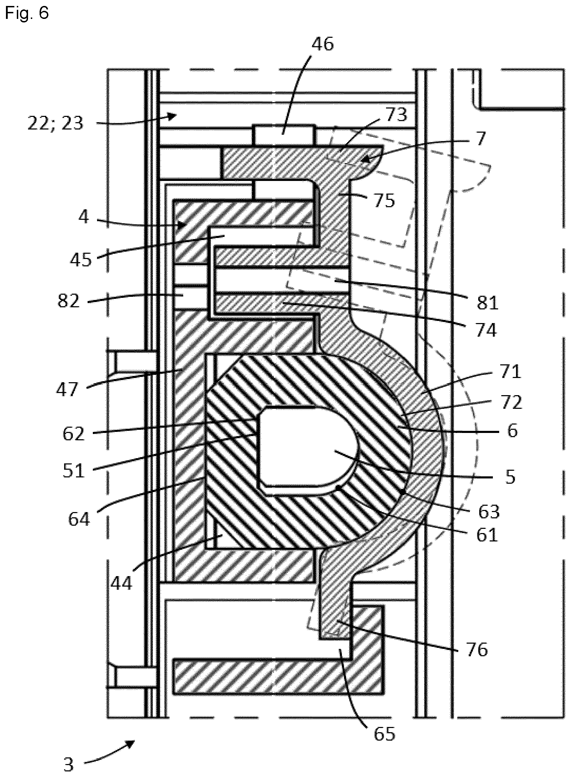

L'organe de filtration 6, et par extension le module de refroidissement 2, est maintenu relativement au support 4 par fixation de la patte de fixation 7 sur le support 4. A cette fin, l'extrémité de la patte de fixation 7 opposée à l'organe de fixation 73, ici la deuxième extrémité 76, est insérée dans l'ouverture 65 du support 4. La patte de fixation 7 est notamment disposée dans une position inclinée relativement à la direction verticale Z afin de permettre une telle insertion, tel que représenté en lignes pointillées à la figure 6. La patte de fixation 7 est ensuite basculée, ou pivotée autour d'un axe parallèle ou sensiblement parallèle à la première direction 110 vers le support 4. L'organe de fixation 73 est ensuite mis en coopération avec l'élément de fixation 46 porté par le support 4 afin de fixer la patte de fixation 7 le long de la première direction 110. La patte de fixation 7 est alors disposée de sorte que le support 4 est au moins partiellement disposé en amont de celle-ci le long de la direction longitudinale X.

Lorsque le système de fixation 3 est ainsi installé et que la patte de fixation 7 est dans une position dite « de fixation », représentée à la figure 6, la première extrémité 75, portant l'organe de fixation 73, coopère avec le support 4 par l'intermédiaire de l'élément de fixation 46. La deuxième extrémité 76 est insérée dans l'ouverture 65 et est au moins en partie bloquée le long de la deuxième direction 120 par le rebord. Le corps 71 de la patte de fixation 7, notamment son renfoncement 72, loge au moins en partie l'organe de filtration 6 de sorte à le maintenir en position dans la première cavité 44 et en prévenir le déplacement le long d'au moins un sens de la deuxième direction 120. L'organe de reprise d'effort 74 s'étend dans la deuxième cavité 45 et, par coopération avec le support 4, assure la jonction entre le module de refroidissement 2 et le support 4, ici la face avant technique.

L'organe de filtration 6 est alors interposé entre la patte de fixation 7 et le support 4. Le support 4 réalise le portage du module de refroidissement 2 par l'intermédiaire du plot de liaison 5 et de l'organe de filtration 6 tandis que la patte de fixation 7 assure leur maintien dans une position adaptée relativement au support 4. La patte de fixation 7 et le support 4 s'étendent en prise de l'organe de filtration 6 de sorte qu'ils préviennent les déplacements du module de refroidissement 2 le long des première, deuxième et troisième directions. L'encombrement généré le long de la direction transversale Y, ou de la première direction 110, est limité puisque la patte de fixation 7 coopère avec tout ou partie de la longueur, définie le long de la direction transversale Y, du plot de liaison 5 et/ou de l'organe de filtration 6 d'une part et s'étend essentiellement en regard du support 4 le long de la deuxième direction 120 d'autre part. Notamment l'intégralité du corps 71 de la patte de fixation 7 s'étend en regard du support 4. Optionnellement, une extrémité libre du plot de liaison 5 et/ou de l'organe de filtration 6 peut venir en appui d'une partie du support 4 de sorte à limiter le déplacement de l'organe de liaison relativement à la patte de fixation 7 le long de la première direction 110.

De par sa position et ses caractéristiques, la patte de fixation 7 est avantageusement configurée pour rompre en cas de choc au niveau de la face avant du véhicule 100, permettant au module de refroidissement 2 d'être déplacée vers l'arrière le long de la direction longitudinale X sans endommager le plot de liaison 5 ou le module de refroidissement 2.

La présente invention propose ainsi un système de fixation adapté à une large variété de véhicules et de modules de refroidissement, notamment de taille et masse variables. Il présente un faible encombrement transversal permettant de préserver les dimensions du module de refroidissement. Il permet, en outre, le portage du module de refroidissement par le support, ici la face avant technique, et non des pièces intermédiaires, celle-ci présentant une meilleure raideur, plus adaptée aux contraintes vibratoires observées en face avant du véhicule et à des modules de refroidissement de dimensions et masse plus importants.

Le système de fixation comprend particulièrement une patte de fixation adaptée pour permettre sa rupture en cas de choc sans pour autant endommager le module de refroidissement. La patte de fixation peut ensuite être remplacée de manière simple et à moindre coût.

## Revendications

1. Système de fixation (3) d'un module de refroidissement (2) comportant un radiateur d'un véhicule (100), comprenant un support (4), tel qu'un élément d'une face avant technique, et
- un plot de liaison (5) s'étendant le long d'une première direction (110);
- un organe de filtration (6) configuré pour limiter la propagation de bruits solidiens depuis le module de refroidissement (2) vers le support (4) en assurant le découplage du module de refroidissement (2) relativement au support (4), l'organe de filtration (6) étant configuré pour entourer au moins partiellement le plot de liaison (5) ;
- une patte de fixation (7) amovible configurée pour coopérer avec l'organe de filtration (6) et comprenant au moins un organe de fixation (73), apte à maintenir ladite patte relativement au support (4) le long d'une deuxième direction (120) orthogonale à la première direction (110), et un organe de reprise d'effort (74) configuré pour maintenir ladite patte le long de la première direction (110) et d'une troisième direction (130), orthogonale à la première direction (110) et deuxième direction (120) ; le support (4) comprenant une première cavité (44) et une deuxième cavité (45), respectivement configurées pour coopérer avec l'organe de filtration (6) et l'organe de reprise d'effort (74), et au moins un élément de fixation (46) configuré pour coopérer avec l'organe de fixation (73), **caractérisé en ce que** la patte de fixation (7) est montée sur le support (4) de sorte que le plot de liaison (5) et l'organe de filtration (6) sont interposés entre un fond (47) de la première cavité (44) et un corps (71) de la patte de fixation (7) le long de la deuxième direction (120).

2. Système de fixation (3) selon la revendication précédente, dans lequel la patte de fixation (7) comprend un corps (71) portant l'organe de reprise d'effort (74) et l'organe de fixation (73), le corps (71), l'organe de reprise d'effort (74) et l'organe de fixation (73) étant venus de matière.

3. Système de fixation (3) selon l'une des revendications précédentes, dans lequel l'organe de reprise d'effort (74) :
- comprend une forme cylindrique ou tronconique ; et/ou
- comprend au moins une rainure (77).

4. Système de fixation (3) selon l'une des revendications précédentes, dans lequel l'organe de fixation (73) est du type clip.

5. Système de fixation (3) selon l'une des revendications précédentes, comprenant en outre au moins un moyen de fixation (8), tel qu'une vis, la patte de fixation (7) et le support (4) comprenant respectivement un orifice (81) et un trou (82) apte à recevoir ledit moyen de fixation (8).

6. Système de fixation (3) selon l'une des revendications précédentes, dans lequel le plot de liaison (5) comprend un bord plat (51) et l'organe de filtration (6) comprend un côté plat (64), configuré pour s'étendre au contact du bord plat (51).

7. Système de fixation (3) selon l'une des revendications précédentes, dans lequel :
- l'organe de filtration (6) est amovible et rapporté relativement à la patte de fixation (7) et au plot de liaison (5) ; ou
- l'organe de filtration (6) est solidaire de la patte de fixation (7).

8. Agencement (1) comprenant au moins un système de fixation (3) selon l'une des revendications précédentes et un module de refroidissement (2) :
- le module de refroidissement (2) comprenant un cadre (22) auquel est relié le plot de liaison (5) ; ou
- le module de refroidissement (2) comprenant une boîte à eau (23), configurée pour permettre la circulation d'un fluide tel que de l'eau glycolée, à laquelle est relié le plot de liaison (5).

9. Véhicule (100) comprenant au moins un système de fixation (3) selon l'une des revendications 1 à 7 et/ou un agencement (1) selon la revendication 8.

10. Procédé de montage d'un système de fixation (3) selon l'une des revendications 1 à 7, comprenant :
- le positionnement de l'organe de filtration (6) sur le plot de liaison (5) ;
- le positionnement du plot de liaison (5) dans la première cavité (44) du support (4) ;
- le placement d'une extrémité de la patte de fixation (7), opposée à l'organe de fixation (73), sur le support (4) et le basculement de la patte de fixation (7) vers une position de fixation dans laquelle la patte de fixation (7) coopère avec l'organe de filtration (6) afin de le maintenir dans la première cavité (44) et dans laquelle l'élément de fixation (46) et l'organe de fixation (73) coopèrent.

## Patentansprüche

1. Befestigungssystem (3) für ein Kühlmodul (2) mit einem Kühler eines Fahrzeugs (100), das eine Halterung (4) umfasst, wie ein Element eines Frontend-Moduls, und
- einen Verbindungsstift (5), der sich entlang einer ersten Richtung (110) erstreckt;
- ein Filterorgan (6), das dazu ausgestaltet ist, die Ausbreitung von Körperschall von dem Kühlmodul (2) zu der Halterung (4) zu begrenzen, indem es die Entkopplung des Kühlmoduls (2) relativ zu der Halterung (4) gewährleistet, wobei das Filterorgan (6) dazu ausgestaltet ist, den Verbindungsstift (5) mindestens teilweise zu umgeben;
- eine abnehmbare Befestigungslasche (7), die dazu ausgestaltet ist, mit dem Filterorgan (6) zusammenzuwirken, und mindestens ein Befestigungsorgan (73) umfasst, das geeignet ist, die Lasche relativ zu der Halterung (4) entlang einer zweiten Richtung (120), die orthogonal zu der ersten Richtung (110) verläuft, zu halten, und ein Kraftaufnahmeorgan (74), das dazu ausgestaltet ist, die Lasche entlang der ersten Richtung (110) und einer dritten Richtung (130), die orthogonal zu der ersten Richtung (110) und zweiten Richtung (120) verläuft, zu halten;
wobei die Halterung (4) eine erste Kavität (44) und eine zweite Kavität (45) umfasst, die jeweils dazu ausgestaltet sind, mit dem Filterorgan (6) und dem Kraftaufnahmeorgan (74) zusammenzuwirken, und mindestens ein Befestigungselement (46), das dazu ausgestaltet ist, mit dem Befestigungsorgan (73) zusammenzuwirken, **dadurch gekennzeichnet, dass** die Befestigungslasche (7) an der Halterung (4) so montiert ist, dass der Verbindungsstift (5) und das Filterorgan (6) zwischen einem Boden (47) der ersten Kavität (44) und einem Körper (71) der Befestigungslasche (7) entlang der zweiten Richtung (120) angeordnet sind.

2. Befestigungssystem (3) nach dem vorhergehenden Anspruch, wobei die Befestigungslasche (7) einen Körper (71) umfasst, der das Kraftaufnahmeorgan (74) und das Befestigungsorgan (73) trägt, wobei der Körper (71), das Kraftaufnahmeorgan (74) und das Befestigungsorgan (73) einstückig sind.

3. Befestigungssystem (3) nach einem der vorhergehenden Ansprüche, wobei das Kraftaufnahmeorgan (74):
- eine zylindrische oder kegelstumpfartige Form umfasst; und/oder
- mindestens eine Nut (77) umfasst.

4. Befestigungssystem (3) nach einem der vorhergehenden Ansprüche, wobei das Befestigungsorgan (73) vom Typ Clip ist.

5. Befestigungssystem (3) nach einem der vorhergehenden Ansprüche, das ferner mindestens ein Befestigungsmittel (8) wie eine Schraube umfasst, wobei die Befestigungslasche (7) und die Halterung (4) jeweils eine Öffnung (81) und eine Bohrung (82) umfassen, die geeignet ist, das Befestigungsmittel (8) aufzunehmen.

6. Befestigungssystem (3) nach einem der vorhergehenden Ansprüche, wobei der Verbindungsstift (5) einen flachen Rand (51) umfasst und das Filterorgan (6) eine flache Seite (64) umfasst, die dazu ausgestaltet ist, sich in Kontakt mit dem flachen Rand (51) zu erstrecken.

7. Befestigungssystem (3) nach einem der vorhergehenden Ansprüche, wobei:
- das Filterorgan (6) abnehmbar ist und relativ zu der Befestigungslasche (7) und zu dem Verbindungsstift (5) angesetzt ist; oder
- das Filterorgan (6) mit der Befestigungslasche (7) fest verbunden ist.

8. Anordnung (1), die mindestens ein Befestigungssystem (3) nach einem der vorhergehenden Ansprüche und ein Kühlmodul (2) umfasst:
- wobei das Kühlmodul (2) einen Rahmen (22) umfasst, mit dem der Verbindungsstift (5) verbunden ist; oder
- wobei das Kühlmodul (2) einen Wasserbehälter (23) umfasst, der dazu ausgestaltet ist, die Zirkulation einer Flüssigkeit wie glykolhaltiges Wasser zu ermöglichen, und mit dem der Verbindungsstift (5) verbunden ist.

9. Fahrzeug (100), das mindestens ein Befestigungssystem (3) nach einem der Ansprüche 1 bis 7 und/oder eine Anordnung (1) nach Anspruch 8 umfasst.

10. Verfahren zur Montage eines Befestigungssystems (3) nach einem der Ansprüche 1 bis 7, umfassend:
- das Positionieren des Filterorgans (6) an dem Verbindungsstift (5);
- das Positionieren des Verbindungsstifts (5) in der ersten Kavität (44) der Halterung (4);
- das Platzieren eines Endes der Befestigungslasche (7), das zu dem Befestigungsorgan (73) entgegengesetzt ist, an der Halterung (4) und das Kippen der Befestigungslasche (7) hin zu einer Befestigungsposition, in der die Befestigungslasche (7) mit dem Filterorgan (6) zusammenwirkt, um es in der ersten Kavität (44) zu halten, und in der das Befestigungselement (46) und Befestigungsorgan (73) zusammenwirken.

## Claims

1. System (3) for fastening a cooling module (2) having a radiator of a vehicle (100), comprising a support (4), such as an element of a technical front face, and
- a connecting peg (5) extending along a first direction (110);
- a filtering member (6) configured to limit the propagation of structure-borne noise from the cooling module (2) to the support (4) by ensuring the decoupling of the cooling module (2) relative to the support (4), the filtering member (6) being configured to at least partially surround the connecting peg (5);
- a removable fastening tab (7) configured to cooperate with the filtering member (6) and comprising at least one fastening member (73), which is able to hold said tab relative to the support (4) along a second direction (120) orthogonal to the first direction (110), and a force reacting member (74) configured to hold said tab along the first direction (110) and a third direction (130), which is orthogonal to the first direction (110) and second direction (120);
the support (4) comprising a first cavity (44) and a second cavity (45), which are respectively configured to cooperate with the filtering member (6) and the force reacting member (74), and at least one fastening element (46) configured to cooperate with the fastening member (73), **characterized in that** the fastening tab (7) is mounted on the support (4) such that the connecting peg (5) and the filtering member (6) are interposed between a bottom (47) of the first cavity (44) and a body (71) of the fastening tab (7) along the second direction (120).

2. Fastening system (3) according to the preceding claim, wherein the fastening tab (7) comprises a body (71) bearing the force reacting member (74) and the fastening member (73), the body (71), the force reacting member (74) and the fastening member (73) being made in one piece.

3. Fastening system (3) according to either of the preceding claims, wherein the force reacting member (74):
- comprises a cylindrical or frustoconical shape; and/or
- comprises at least one groove (77).

4. Fastening system (3) according to one of the preceding claims, wherein the fastening member (73) is of the clip type.

5. Fastening system (3) according to one of the preceding claims, further comprising at least one fastening means (8), such as a screw, the fastening tab (7) and the support (4) respectively comprising an orifice (81) and a hole (82) able to receive said fastening means (8).

6. Fastening system (3) according to one of the preceding claims, wherein the connecting peg (5) comprises a flat edge (51) and the filtering member (6) comprises a flat side (64), which is configured to extend in contact with the flat edge (51).

7. Fastening system (3) according to one of the preceding claims, wherein:
- the filtering member (6) is removable and added relative to the fastening tab (7) and to the connecting peg (5); or
- the filtering member (6) is as one with the fastening tab (7).

8. Arrangement (1) comprising at least one fastening system (3) according to one of the preceding claims and a cooling module (2):
- the cooling module (2) comprising a frame (22) to which the connecting peg (5) is connected; or
- the cooling module (2) comprising a water box (23), configured to allow the circulation of a fluid such as glycol water, to which the connecting peg (5) is connected.

9. Vehicle (100) comprising at least one fastening system (3) according to one of Claims 1 to 7 and/or an arrangement (1) according to Claim 8.

10. Method for assembling a fastening system (3) according to one of Claims 1 to 7, comprising:
- positioning the filtering member (6) on the connecting peg (5);
- positioning the connecting peg (5) in the first cavity (44) of the support (4);
- placing one end of the fastening tab (7), which is opposite the fastening member (73), on the support (4) and tilting the fastening tab (7) towards a fastening position in which the fastening tab (7) cooperates with the filtering member (6) in order to hold it in the first cavity (44) and in which the fastening element (46) and the fastening member (73) cooperate.
